# EUROPÄISCHE PATENTSCHRIFT

(11) **EP 2 499 436 B1**
(45) Veröffentlichungstag und Bekanntmachung des Hinweises auf die Patenterteilung: **13.04.2016**
(21) Anmeldenummer: 10774226.4
(22) Anmeldetag: 09.11.2010
(51) Int. Cl.: F24H 1/00, H05B 3/48, B60H 1/22, F24H 1/12, F24H 9/20

(54) **ELEKTRISCHER HEIZER**
ELECTRIC HEATER
DISPOSITIF DE CHAUFFAGE ÉLECTRIQUE

(30) Priorität: 09.11.2009 DE 102009052384
(43) Veröffentlichungstag der Anmeldung: 19.09.2012
(73) Patentinhaber: DBK David + Baader GmbH, Nordring 26 76761 Rülzheim (DE)
(72) Erfinder: OBST, Andreas, 76870 Kandel (DE); AICHELE, Jan, 71665 Vaihingen / Enz (DE)
(74) Vertreter: Winter, Brandl, Fürniss, Hübner, Röss, Kaiser, Polte - Partnerschaft mbB
(86) Internationale Anmeldenummer: PCT/EP2010/067137
(87) Internationale Veröffentlichungsnummer: WO 2011/054970

(56) Entgegenhaltungen:
- EP-A1- 0 481 842
- US-A- 4 512 324
- US-B1- 6 637 378

## Beschreibung

Die vorliegende Erfindung betrifft einen elektrischen Heizer, z.B. einen Zuheizer, zur Erwärmung von Fluiden in Fahrzeugen.

Heizer, insbesondere Heizsysteme dieser Gattung werden in Fahrzeugen insbesondere Kraftfahrzeugen für unterschiedliche Anwendungen benötigt, wie beispielsweise zur Aufheizung (Erwärmung) der Raumluft in der Fahrgastzelle, zur Vorheizung beispielsweise des Kühlwassers von Wasser gekühlten Motoren, zum Vorglühen der Zündkerzen bei selbstzündenden Brennkraftmaschinen, zur Erwärmung von Kraftstoff (Dieselkraftstoff), usw.

Dokument US 6 637 378 B1 offenbart einen elektrischer Heizer zum Erwärmen eines Fluids in einem Fahrzeug mit einem Fluid führenden sowie von diesem durchströmten Gehäuse, in dem zumindest ein Heizkörper aufgenommen ist, und mit einem zweitem Gehäuse, wobei Endabschnitte des Heizkörpers gedichtet durch das fluidführende Gehäuse hindurch in das zweite Gehäuse geführt sind, wobei der Heizkörper wendelförmig ausgebildet ist und mit einer Steuerschaltung elektrisch kontaktiert ist, und wobei die Endabschnitte des Heizkörpers in einem Winkel, etwa quer zu einer Durchströmungsrichtung aus dem fluidführenden Gehäuse herausgeführt sind.

Üblicherweise bestehen Heizsysteme für Kraftfahrzeuge aus einer Heizung mit zumindest einer Heizstufe, die jeweils mindestens ein (beispielsweise als Heizwiderstand ausgebildetes) Heizelement zur Erzeugung einer bestimmten Heizleistung aufweisen, sowie aus einer Steuer- bzw. Kontrolleinheit zur Überwachung und/oder Steuerung des zeitlichen Ablaufs und zur Vorgabe der Heizleistung.

Insbesondere in den modernen Fahrzeugen, welche in ihrem Bordnetz hohe elektrische Spannungen verwenden, wie beispielsweise elektrisch betriebene Fahrzeuge, Hybridfahrzeuge oder Brennstoffzellenfahrzeuge, müssen Fluidumlaufsysteme aufgrund fehlender oder nur temporär verfügbarer Wärmequellen wie beispielsweise ein Verbrennungsmotor, erwärmt werden. Dies sind in der Regel Wasserumlaufsysteme, welche zur Erwärmung des Innenraums der Fahrgastzelle eines Fahrzeugs oder zur Erwärmung von Antriebskomponenten, wie beispielsweise der Batterie dienen.

Da die Motorabwärme als ein Wärmelieferant bei derartigen Fahrzeugen nicht oder nur temporär zur Verfügung steht (beziehungsweise nur in begrenztem Maße Wärme abgibt, wie beispielsweise beim Hybridfahrzeug), müssen zusätzliche Heizsysteme vorgesehen werden. Hierfür bieten sich insbesondere elektrische Heizsysteme an, wie sie aus dem Stand der Technik beispielsweise gemäß der DE 196 42 442 A1 bekannt sind.

Dieses bekannte System muss indessen beim Einsatz in modernen Fahrzeugen insbesondere mit alternativen Antrieben auf die Verwendung der bei diesen Fahrzeugen üblichen hohen Bordnetzspannung (max. 500 V) angepasst werden. Dabei muss das System zusätzlich elektrisch sicher sein, sollte also beispielsweise eine hohe Durchbruchspannung aufweisen. Das System sollte ferner regelbar sein, was die Verwendung einer Elektronik zwangsläufig nötig macht. Des Weiteren ist eine hohe mechanische Stabilität erforderlich, da ein derartiges System im Betrieb des Fahrzeugs einer hohen Schwingbelastung ausgesetzt ist und auch in einem Crashfall sicher bleiben sollte. Entscheidend hierbei ist, dass eine die Fahrzeuginsassen gefährdende Spannungsübertragung an die Karosserie in jedem gewöhnlichen und außergewöhnlichen Betriebszustand vermieden wird.

Grundsätzlich ist es im Stand der Technik bekannt, insbesondere in einem Kraftfahrzeug einen Kühlwasserheizer zu verbauen. So werden unter anderem auch sogenannte Brennstoffheizer angeboten, welche Treibstoffe verbrennen und die Wärme in einem Wärmetauscher an das Kühlwasser weitergeben. Ende der 90er Jahre hat sich jedoch der elektrische Kühlwasserheizer etabliert, wie er unter anderem in dem vorstehend genannten Stand der Technik beschrieben ist. Dieses System, welches bereits mit einem Sicherheitskonzept zur Vermeidung von Spannungsübertragungen an die Karosserie eines Fahrzeugs ausgestattet ist, ist jedoch an die Bordnetzspannung eines herkömmlichen Kraftfahrzeugs angepasst und arbeitet demzufolge nur an einer Niederspannung beispielsweise von 12V oder 24 V. Des Weiteren ist aus dem Stand der Technik ein Rohrheizkörper (RHK) als ein elektrisches Heizelement bekannt, der in seiner Auslegung auf eine Endspannung von 230 V (oder 400V) eingestellt ist. Derartige Rohrheizkörper sind jedoch nicht für den Einsatz in einem Fahrzeug und insbesondere einem Kraftfahrzeug vorbereitet.

Angesichts dieses Stands der Technik liegt der Erfindung die Aufgabe zu Grunde, einen für hohe Betriebsspannungen geeigneten, einfach aufgebauten Heizer zu schaffen, der für den Einbau in Fahrzeugen und insbesondere Kraftfahrzeugen vorzugsweise moderner Bauart geeignet ist.

Diese Aufgabe wird durch einen Heizer, z.B. in Form eines Zuheizers, mit den Merkmalen des Anspruchs 1 gelöst. Vorteilhafte Weiterbildungen der Erfindung sind Gegenstand der Unteransprüche.

Der erfindungsgemäße elektrische Heizer eines Fahrzeugs hat demzufolge ein fluidführendes Gehäuse, in dem zumindest ein wendelförmiger Heizkörper, weiter vorzugsweise ein (Draht-)Widerstandsheizelement, aufgenommen ist. Weiter sind die Endabschnitte des zumindest einen Heizkörpers dichtend bzw. in abgedichteter Weise durch das fluidführende Gehäuse hindurch in ein Elektronikgehäuse geführt, in welchem eine Steuerschaltung für den Heizkörper untergebracht ist. Damit kann erreicht werden, dass die elektrischen Anschlüsse an dem Heizkörper geschützt innerhalb des Elektronikgehäuses liegen und elektrisch isoliert sind.

Der Heizkörper hat einen rohrförmigen Außenkörper, in dem ein mit der in dem Elektronikgehäuse untergebrachten Steuerschaltung elektrisch kontaktiertes Heizelement derart eingebettet ist, dass sich zwischen dem Außenkörper und dem Heizelement ein ringspaltförmiger Zwischenraum ausbildet, der mit einem Isolator aufgefüllt ist. Erfindungsgemäß ist der Außendurchmesser des Heizelements wesentlich kleiner als der Innendurchmesser des Außenkörpers. Hierdurch kann ein elektrisches Durchschlagen der Spannung an der Heizwendel auf den Außenkörper auch im Crashfall sicher vermieden werden.

Vorzugsweise ist der Heizkörper innen- und/oder umfangsseitig sowie in Umströmungsrichtung durch Halteelemente am fluidführenden Gehäuse abgestützt und wird dadurch stabilisiert. Die Halteelemente können ferner als Strömungsleitelemente vorzugsweise zur Verwirbelung des durchströmenden Fluids ausgeformt sein oder entsprechende Strömungsleitelemente tragen. Die Halteelemente sind herbei aus einem metallischen Werkstoff und/oder einem Kunststoff herstellbar.

Gemäß einem weiteren Aspekt der Erfindung kann das Elektronikgehäuse über eine Halterung vorzugsweise in Form von Laschen oder Bändern aus Stahl, Aluminium oder einem Kunststoff am Fluid durchströmten Gehäuse gehalten sein, die auch eine Befestigungseinrichtung des Heizers zur Befestigung an einem Stützbauteil bildet. Die Laschen oder Bänder bilden somit einen vorzugsweise seitlichen Schutz für das Elektronikgehäuse. Ferner kommt das Elektronikgehäuse bei diesem Befestigungskonzept zwangsläufig zwischen dem fluidführenden Gehäuse und dem Stützbauteil (Karosserieteil des Fahrzeugs) zu liegen und wird somit vom fluidführenden Gehäuse gegen äußere Einwirkungen abgeschirmt.

Schließlich kann das fluidführende Gehäuse gemäß einem weiteren Aspekt der Erfindung ein das Heizelement tragendes, vorzugsweise rinnenförmig ausgebildetes Schalenteil, ein dieses ergänzendes, ebenfalls vorzugsweise rinnenförmig ausgebildetes Schalenteil sowie zwei stirnseitige Gehäuseabschlussteile jeweils mit einem Fluidzu- oder Fluidablauf aufweisen. Dieser Aufbau ist leicht herstellbar und der zumindest eine Heizkörper ist einfach in dem Gehäuse montierbar, da das Gehäuse quasi um den zumindest einen Heizkörper herum aus den genannten vier Teilen zusammengesetzt wird.

Dabei sei darauf hingewiesen, dass das Gehäuse grundsätzlich aus einem Metall und/oder einem Kunststoff bestehen kann. Auch besteht die Möglichkeit, den Ein- und Auslass des Gehäuses an sich gegenüberliegenden Gehäuseendabschnitten oder an demselben Gehäuseendabschnitt anzuordnen, wobei im letzteren Fall das Gehäuse aus zwei ineinander geschobenen Teilgehäusen besteht, sodass im inneren Teilgehäuse eine erste Strömungsrichtung gebildet wird, die in eine entgegengesetzte Strömungsrichtung zwischen den inneren und äußeren Teilgehäusen übergeht.

Der elektrische Heizer kann eine Leistungselektronik aufweisen, über die zumindest ein Heizkreis angesteuert wird. Dieser Heizkreis hat ein Widerstandsheizelement, das mit der Leistungselektronik kontaktiert ist. In einem Datenspeicher der Leistungselektronik kann eine Widerstands-Temperatur-Kennlinie des Widerstandsheizelementes abgelegt sein.

Während des Betriebs des Heizers wird der Widerstand des Widerstandsheizelementes ermittelt, beispielsweise durch Messung der Stromstärke bei vorgegebener Spannung, und in Abhängigkeit von diesem aktuell ermittelten Widerstand über die Kennlinie die Ist-Temperatur ausgelesen. Die elektrische Leistung wird dann über die Leistungselektronik in Abhängigkeit von dieser Ist-Temperatur moduliert und ggf. der Heizer oder ein Heizkreis abgeschaltet, wenn eine Maximaltemperatur überschritten ist. D.h. nach diesem Verfahren erfolgt eine Leistungsmodulation in Abhängigkeit von der über die Kennlinie ermittelten Temperatur.

Dementsprechend ist der elektrische Heizer mit einer Leistungselektronik ausgeführt, über die zumindest ein Heizkreis ansteuerbar ist. Dieser hat ein Widerstandsheizelement mit einer in Betriebstemperaturbereich etwa linearen Widerstands-Temperatur-Kennlinie, das mit der Leistungselektronik elektrisch kontaktiert ist. Diese hat einen Datenspeicher zur Ablage der Kennlinie und ist derart ausgelegt, dass ein Ist-Widerstand des Widerstandsheizelementes ermittelt und in Abhängigkeit von diesem Ist-Widerstand eine Ist-Temperatur aus dem Datenspeicher ausgelesen werden kann und dann die Ansteuerung des Widerstandsheizelementes in Abhängigkeit von dieser Ist-Temperatur erfolgt.

Durch dieses Verfahren und den entsprechenden Heizer kann eine äußerst kostengünstige Temperaturüberwachung praktisch ohne zusätzliche Bauelemente realisiert werden, wobei ein Vorteil darin liegt, dass das gesamte Widerstandsheizelement selbst als Temperaturfühler wirkt und somit auch eine integrale Temperaturbestimmung ermöglicht wird. Das nach diesem Verfahren gewonnene Temperatursignal kann dann zur Steuerung des Heizers, beispielsweise zum Abschalten des gesamten Heizers oder zum Wegschalten einzelner Heizkreise oder zur Leistungsmodulation verwendet werden.

Bei einer Variante wird angenommen, dass die Kennlinie im Betriebstemperaturbereich näherungsweise linear verläuft, so dass die Erfassung der Kennlinie vereinfacht ist. Prinzipiell ist es selbstverständlich auch möglich, eine exakte Kennlinie mit nicht linearem Verlauf zugrunde zu legen.

Bei einer linearen Kennlinie gestaltet sich die Kalibrierung vor Inbetriebnahme des Heizers relativ einfach, da beispielsweise bei vorgegebenen Referenztemperaturen jeweils der sich dabei ergebende Widerstand gemessen wird und dann aus den Widerstands-/Temperaturwerten unter Annahme eines etwa linearen Kennlinienverlaufes die Kennliniensteigung berechnet wird.

Die Kalibrierung ist noch einfacher, wenn man davon ausgeht, dass die Steigung der Kennlinie des Widerstandsmaterials auch bei Fertigungs- und Materialschwankungen gleich bleibt und die jeweiligen Kennlinien in Abhängigkeit von Material- und Fertigungsschwankungen lediglich parallel verschoben sind. In diesem Fall reicht es aus, eine einzige Messung bei vorgegebener Referenztemperatur durchzuführen und aus dem sich dann ergebenden Wertepaar (Widerstand, Temperatur) die Lage der Kennlinie mit vorgegebener Steigung zu bestimmen.

Beim erfindungsgemäßen Heizer kann ein Steuerelement der Leistungselektronik zum Schalten oder Regeln des Widerstandsheizelementes auch zur Messung der Stromstärke ausgelegt sein, so dass bei vorgegebener Betriebsspannung (Niedervolt etwa 13,5 V, Hochvolt zwischen 192 V und 450 V) und aus der gemessenen Stromstärke der Ist-Widerstand des Widerstandsheizelementes ermittelt werden kann.

Die Erfindung wird nachstehend anhand von Ausführungsbeispielen unter Bezugnahme auf die begleitenden Figuren näher erläutert.
Fig. 1 und 2 zeigen jeweils eine untere Perspektivenansicht eines Heizers (oder Zuheizers) in der Ausbildung eines Wasserheizers mit angesetztem Elektronikgehäuse gemäß einem ersten Ausführungsbeispiel der Erfindung,
Fig. 3 zeigt den erfindungsgemäßen Heizer mit Elektronikgehäuse in einer Längsansicht,
Fig. 4 zeigt den erfindungsgemäßen Heizer mit Elektronikgehäuse in einer Frontansicht,
Fig. 5 zeigt den erfindungsgemäßen Heizer mit Elektronikgehäuse in einer ersten oberen Perspektivenansicht,
Fig. 6 zeigt den erfindungsgemäßen Heizer mit Elektronikgehäuse in einer zweiten, oberen Perspektivenansicht,

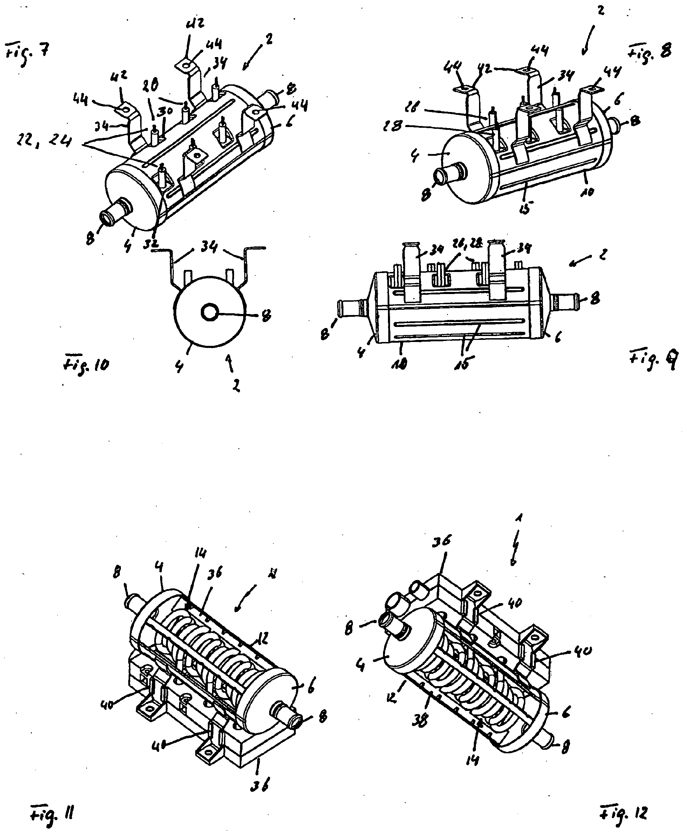

Fig. 7 und 8 zeigen jeweils eine Perspektiveansicht des Heizers in der Ausbildung eines Wasserheizers ohne Elektronikgehäuse gemäß dem ersten Ausführungsbeispiel der Erfindung,
Fig. 9 zeigt den erfindungsgemäßen Heizer ohne Elektronikgehäuse in einer Längsansicht,
Fig. 10 zeigt den erfindungsgemäßen Heizer ohne Elektronikgehäuse in einer Frontansicht,
Fig. 11 zeigt den erfindungsgemäßen Heizer mit Elektronikgehäuse in einer ersten teilaufgebrochenen Perspektivenansicht,
Fig. 12 zeigt den erfindungsgemäßen Heizer mit Elektronikgehäuse in einer zweiten teilaufgebrochenen Perspektivenansicht,

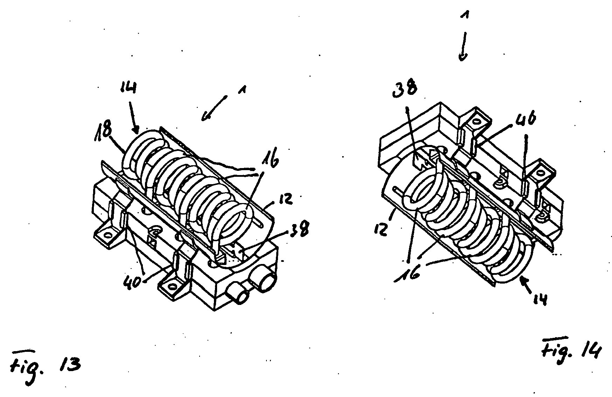

Fig. 13 und 14 zeigen den Heizer mit Elektronikgehäuse in einer teilaufgebrochenen Perspektivenansicht ohne stirnseitige Verschlussdeckel,
Fig. 15 zeigt eine Perspektivenansicht eines Heizers (oder Zuheizers) in der Ausbildung eines Wasserheizers gemäß einem zweiten Ausführungsbeispiel der Erfindung, wobei das Elektronikgehäuse nicht angezeigt ist,
Fig. 16 zeigt eine Perspektivenansicht des Heizers gemäß Fig. 15 mit abgenommenen Verschlussdeckeln des Gehäuses,
Fig. 16a zeigt eine Frontansicht des Heizers gemäß der Fig. 16,
Fig. 17 zeigt einen Längsschnitt eines Heizers gemäß einem dritten Ausführungsbeispiel der Erfindung,
Fig. 17a zeigt eine Alternative des dritten Ausführungsbeispiels gemäß Fig. 17,
Fig. 18a, 18b zeigen Kennlinien von Widerstandsheizelementen und
Fig. 19 zeigt ein stark vereinfachtes Verfahrensschema der Ansteuerung eines Heizers.

Der Heizer 1 (oder Zuheizer) gemäß dem ersten Ausführungsbeispiel der Erfindung (nachfolgend auch als Wasserheizer WH bezeichnet) ist für den Einbau in den Umlauf eines Betriebsfluids z.B. Kühlwasser eines Fahrzeugs vorbereitet. Der Wasserheizer 1 besteht hierfür aus einem vorzugsweise zweischalig aufgebauten röhren- bzw. zylinderförmigen Gehäuse 2 mit einem Anfangs- und Endbereich 4, 6. Ein Anfangs- und Endbereich 4, 6 des Gehäuses 2 bilden jeweils becherförmige Verschlussdeckel (Fluidanschlüsse), in denen jeweils ein Anschluss 8 entsprechend einem Zu- und einem Ablauf angeformt sind. Es besteht hierbei auch die Möglichkeit, dass die Anschlüsse 8 als getrennte (einzelne) Bauteile an die Verschlussdeckel angeschraubt, geschweißt oder gelötet sind. Die Anschlüsse 8 können auch einstückig mit den Verschlussdeckeln ausgebildet sein. Diese vier Bauteile (nämlich die zwei vorzugsweise zu einem Zylinder (oder einfach Rohrstutzen) zusammenfügbaren Halbschalen 10, 12 sowie die beiden am Anfangs- und Endbereich des Gehäuses 2 angeordneten Verschlussdeckel 4, 6 bestehen beispielsweise aus einem Edelstahl oder einem Aluminium und können nach Einbau einer Heizeinrichtung 14 zu dem Gesamtgehäuse 2 zusammengeschweißt werden. Die Halbschalen 10,12 können vorzugsweise als Stanzteile hergestellt werden, die vorliegend durch längs sich erstreckende, in Umfangsrichtung gleichmäßig beabstandete Verstärkungsrippen, Leisten oder Bleche 15 optional ausgesteift sind. Alternativ hierzu ist es aber auch möglich, die Halbschalen 10, 12 aus einem anderen Material, wie beispielsweise einem Kunststoff oder einem Metall-Kunststoffverbund zu fertigen. Auch ist die vorstehend beschriebene Zylinderform nicht zwingend, sondern kann auch durch eine Art "Wanne mit Deckel" d.h. Halbkreisform, eine Rechtecksform oder eine andere geeignete Querschnittsform ersetzt werden.

Als Heizeinrichtung 14 ist vorliegend zumindest ein elektrisches Heizgerät vorgesehen, das in Form eines sogenannten Rohrheizkörpers 16 (nachfolgend auch als RHK bezeichnet) ausgebildet ist. Ein derartiger RHK 16 besteht im Wesentlichen aus einem rohrförmigen Außenkörper 18 (mit einem Durchmesser von ca. 8 bis 10 mm), in den ein Heizelement, d.h. eine Heizwendel 20 (mit einem Durchmesser von ca. 4 mm) aus einem geeigneten Heizleitermaterial (auch als Draht-Widerstandsheizelement bezeichnet) mittig eingebracht ist. Ein hierbei verbleibender ringspaltförmiger Raum zwischen dem Außenkörper (Rohrkörper) 18 und der Heizwendel 20 ist mit einem elektrisch isolierenden Material gefüllt. Dieses isolierende Material besteht in der Regel aus einem Magnesiumoxyd und wird der Einfachheit halber auch als "MgO" bezeichnet.

An den axialen Enden 22, 24 der (Draht-)Heizwendel 20 (d.h. am Austritt aus dem rohrförmigen Außenkörper 18) sind geeignete Anschlusselemente für das Anschließen an einen elektrischen Stromkreis (nicht weiter dargestellt) angebracht. Darüber hinaus ist der rohrförmige Außenkörper 18 an seinen axialen Enden dicht verschlossen, wodurch auch der ringspaltförmige Zwischenraum abgedichtet wird. Der derart gefertigte Rohrheizkörper (RHK) 16 ist durch Biegen für die Verwendung in dem Wasserheizer 1 in eine wendelförmige Gestalt gebracht Die axialen Enden 26, 28 des RHK 16 gehen dabei in eine Raumrichtung, welche sich beim Einbau des mindestens einen RHK (Rohrheizkörpers) 16 in dem vorzugsweise rohr- bzw. zylinderförmigen das Fluid führende Gehäuse 2 in eine diesbezügliche (im Wesentlichen) radiale Richtung ausrichtet.

Im Konkreten ist das vorzugsweise rohr- bzw. zylinderförmige, das Fluid führende Gehäuse 2 im Bereich der miteinander verschweißten Halbschalen 10, 12 mit einer Anzahl von axial beabstandeten Durchgangsbohrungsreihen jeweils bestehend aus zwei Durchgangsbohrungen 30, 32 (mantelseitig) ausgebildet, wobei durch jedes Durchgangsbohrungspaar die beiden axialen Enden 26, 28 jeweils eines RHK (Rohrheizkörpers) 16 hindurch geführt sind. Die Durchgangsöffnungen 30, 32 sind ferner durch geeignete Dichtungselemente (nicht gezeigt) fluiddicht abgedichtet. Des Weiteren sind an dem vorzugsweise röhren- bzw. zylinderförmigen Gehäuse 2 im Bereich der Durchgangsöffnungen 30, 32 eine Anzahl von Montagefüßen oder Laschen 34 angebracht, vorzugsweise angeschweißt, an denen das Gehäuse 36 einer Steuerungselektronik fixiert ist, derart, dass die aus dem zylinderförmigen Gehäuse 2 des Wassererhitzers im Wesentlichen radial herausragenden freien Enden 26, 28 der jewieligen Rohrheizkörper 16 in das Gehäuse 36 der Steuer- bzw. Regelelektronik vorragen. Auf diese Weise werden die freien Enden 26, 28 der jeweiligen RHK's durch das Gehäuse 36 der Elektronik elektrisch isoliert.

An dieser Stelle sei darauf hingewiesen, dass es für die Verwendung der RHK's (Rohrheizkörper) 16 bei hohen Betriebsspannungen und insbesondere zur Erzielung einer für den Betrieb in Fahrzeugen geforderten hohen Durchbruchsspannung nötig ist, die (radiale) Isolierstrecke, welche durch den Isolator "MgO" bereit gestellt wird, gegenüber den aus dem Stand der Technik bekannten Wasserheizem zu vergrößern, um Betriebsspannungen von bis zu 500V zu verwirklichen. Da der Außendurchmesser des Außenkörpers 18 in der Regel nicht vergrößert werden soll oder kann, wird die Heizwendel 20 im Innern des rohrförmigen Außenkörpers 18 auf einen Durchmesser reduziert, der weniger als die Hälfe des Innendurchmessers des Außenkörpers 18 beträgt.

Des Weiteren können für die Darstellung mehrerer Heizkreise beziehungsweise mehrerer Heizstufen mehrere der RHK's (Rohrheizkörper) 16 längs des vorzugsweise zylinderförmigen Gehäuses 2 hintereinander (seriell) positioniert werden. Jeder dieser Rohrheizkörper 16 beziehungsweise seiner freien Enden 26, 28 ragt durch ein jeweiliges (mantelseitiges) Öffnungspaar im zylinderförmigen Gehäuse 2, mit entsprechenden Dichtungen an den Öffnungen, nach Außen vor.

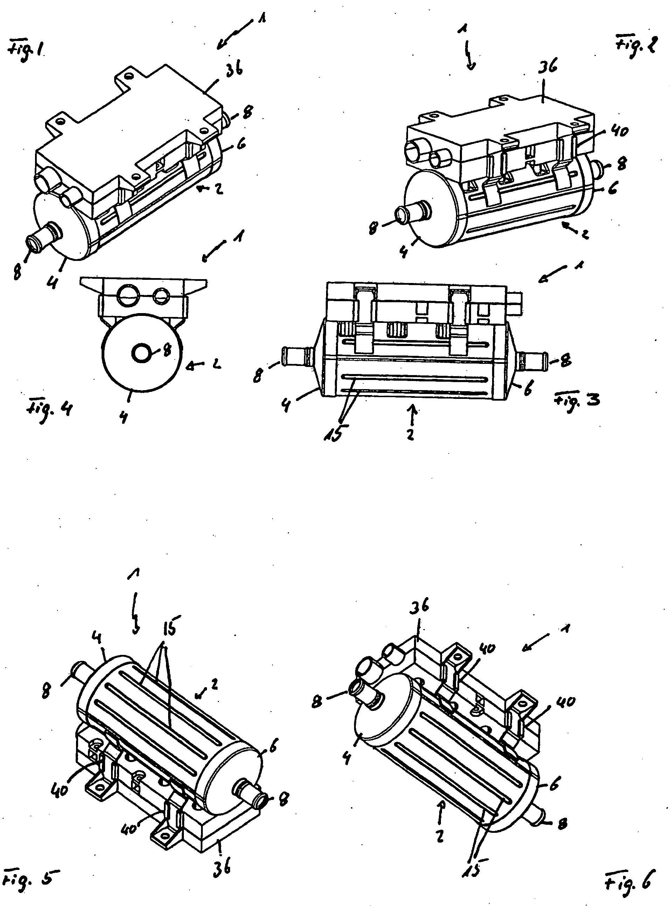

Um die RHK's (Rohrheizkörper) 16 innerhalb des vorzugsweise zylinderförmigen Gehäuses 2 schwingfest zu lagern, sind innerhalb des Gehäuses 2 eine Anzahl von Halteelementen 38 vorgesehen, wie diese gemäß dem ersten bevorzugten Ausführungsbeispiel in den Figuren 5 und 6 dargestellt sind. Demzufolge bestehen die Halteelemente 38 dieses Ausführungsbeispiels aus einem gleichen Material wie das Gehäuse 2 des Wasserheizers und können so in die Halbschalen 10, 12 des zylinderförmigen Gehäuses 2 eingeschweißt oder einstückig mit den Halbschalen 10, 12 ausgeformt werden. Alternativ hierzu ist es aber auch möglich, die Halteelemente aus einem Kunststoff herzustellen und diese in die Halbschalen 10, 12 beispielsweise einzukleben.

Vorliegend handelt es sich bei den Halteelementen 38 um längs des Gehäuses 2 sich erstreckende Bleche, Leisten oder Schienen (vorzugsweise 3 Schienen, die zu je 120° versetzt in dem Gehäuse 2 angeordnet sind), in denen Nuten oder Kerben ausgeformt sind, die formschlüssig (punktuell) mit den wendelförmig gebogenen RHK's (Rohrheizkörpern) 16 in Eingriff sind. Diese Halteelemente 38 haben daneben die Zweitfunktion, das das Gehäuse 2 durchströmende Fluid zu verwirbeln, um so eine bessere Wärmeübertragung und Wärmeenergie-Aufnahme im Fluid zu gewährleisten. Vorzugsweise können hierfür an den Halteelementen 38 zusätzliche Verwirbelungselemente (nicht gezeigt) in Form von Flügeln oder Hinterschneidungen angebracht bzw. ausgebildet sein. Alternativ oder zusätzlich hierzu ist es aber auch möglich, die Halteelemente 38 selbst zu Strömungsleitelementen vorzugsweise für ein Verwirbeln der Fluidströmung innerhalb des Gehäuses 2 auszuformen.

Wie vorstehend bereits ausgeführt wurde, sind die freien Enden 26, 28 des mindestens einen RHK (Rohrheizkörpers) 16 gedichtet aus dem röhrenförmigen Gehäuse durch das zugehörige (mantelseitige) Öffnungspaar vorzugsweise radial nach Außen geführt. Diese Dichtung kann beispielsweise als eine Lötbuchse vorgesehen sein.

An das fluidführende Gehäuse 2 ist (mantelseitig) gemäß der Figuren 5 und 6 das weitere Gehäuse 36 angeflanscht, welches die Leistungselektronik des erfindungsgemäßen Wasserheizers aufnimmt. Diese Anbringung des Elektronikgehäuses 36 am fluidführenden Gehäuse 2 erfolgt über die genannten laschenförmigen Montagefüße 34 (Halterungen), die am Fluid- bzw. wasserführenden Gehäuse 2 angeschweißt, gelötet oder genietet sind und sich im Wesentlichen in Richtung der aus dem Gehäuse 2 vorragenden freien Enden 26, 28 der Rohrheizkörper 16 erstrecken. Die Montagefüße 34 greifen jeweils an Führungen 40 des Elektronikgehäuses 36 ein, welche seitlich am Elektronikgehäuse 36 ausgeformt sind und somit das Aufstecken des Elektronikgehäuses 36 auf das fluidführende Gehäuse 2 ermöglichen. Bei diesem Aufsteckvorgang dringen auch gleichzeitig die aus dem fluidführenden Gehäuse 2 fluiddicht (sowie radial) vorragenden freien Enden 26, 28 der Rohrheizkörper 16 in entsprechenden Durchgangsbohrungen (nicht detailliert dargestellt) des Elektronikgehäuses 36 ein.

Die Halterungen 34 haben jedoch auch eine zweite Funktion. Neben der erwähnten Halterung des Elektronikgehäuses 36 am fluidführenden Gehäuse 2 bilden diese auch die Halterungen am Fahrzeug. Hierfür sind die laschenförmigen Halterungselemente 34 an ihren jeweils frei vorragenden Endabschnitten jeweils rechtwinklig abgebogen und bilden so Aufstandsfüße 42, in denen jeweils eine Durchgangsbohrung 44 für die Aufnahme einer nicht gezeigten Befestigungsschraube ausgeformt sind. Über diese erfindungsgemäße Verbindung mittels der laschenförmigen Halterungselemente 34 wird erreicht, dass die Elektronik mit ihren hohen Strömen immer geschützt zwischen dem fluidfführenden Gehäuse 2 und der Fahrzeugstruktur (zum Beispiel der Karosserie) liegt, an der der Wasserheizer angeschraubt ist. Darüber hinaus wird das Elektronikgehäuse 36 beidseitig von den laschenförmigen Halterungselementen 34 umgriffen und somit ausgesteift. In einem Crashfall wird daher zuerst das fluidführende Gehäuse 2 getroffen und gegebenenfalls Energie absorbierend deformiert, bevor das Elektronikgehäuse 36 in den Aufprall einbezogen wird. Hierdurch kann vermieden werden, dass offene elektrische Spannungen an der Karosserie innerhalb einer Unfallssituation anliegen.

Schließlich haben die Halterungen 34 noch eine dritte Funktion. Es hat sich in Versuchen gezeigt, dass für die Elektronik ein Potentialausgleich erforderlich ist, der auf dem Potential des Fahrzeugs (Fahrzeugmasse) liegen sollte. Dann kann dieser als Isoliationswächter verwendet werden, mit dessen Hilfe ein Isolationsfehler im Hochvolt-Stromkreis sicher detektiert wird. Dabei ist es vorteilhaft (nötig), eine niederohmige Verbindung zwischen Gehäuse und Fahrzeugkarosserie zu schaffen. Erfindungsgemäß bilden/schaffen die Halterungen 34 diesen Potentialausgleich.

Wie vorstehend bereits ausgeführt wurde, ragen in montiertem Zustand die freien Enden 26, 28 des zumindest einen RHK (Rohrheizkörpers) 16 in das normalerweise aus Kunststoff gefertigte Elektronikgehäuse 36 ein. Diese Durchdringungsbereiche (Durchgangsöffnungen 30, 32) sind beispielsweise durch geeignete Dichtungsmittel gegenüber dem Fluidraum abgedichtet. Die freien Enden 26, 28 des zumindest einen RHK (Rohrheizkörpers) 16 sind schließlich direkt mit der im Elektronikgehäuse 36 montierten Steuerelektronik beispielsweise durch Löten verbunden.

Die Steuer- bzw. Regelelektronik ist ferner mit einigen Sicherheitseinrichtungen ausgestattet wie sie nachfolgend kurz aufgelistet werden:

Die Anschlüsse der Rohrheizkörper 16 (bzw. der wendelförmigen Heizelemente 20) mit der Elektronik erfolgt, wie bereits ausgeführt wurde, innerhalb des Elektronikgehäuses 36 vorzugsweise durch unmittelbares Anlöten der freien Enden 26, 28 des zumindest einen Rohrheizkörpers 16 beispielsweise an eine elektrische Platine. Hierdurch werden die elektrischen Kontakte zwischen dem Rohrheizkörper 16 und der Elektronik vom Elektronikgehäuse 36 gegen thermische, korrosive und/oder mechanische Einwirkungen geschützt. Auch sind die Anschlüsse von nicht gezeigten Versorgungsleitungen für die Elektronik im Elektronikgehäuse 36 untergebracht und damit ebenfalls vor Beschädigungen geschützt

Die Elektronik ist ferner in einer sogenannten eigensicheren Auslegung (Redundanz) aufgebaut, um Funktionsausfälle zu reduzieren bzw. zu vermeiden. Sie hat natürlich eine Überhitzungssicherung, insbesondere für den Fall, dass sich kein Fluid (zu erwärmendes Medium) im Heizer befindet. Demzufolge ist die Elektronik auch mit einer Temperaturüberwachungsfunktion beispielsweise eines im Medium (Fluid) angeordneten Temperaturtühlers ausgerüstet. Da die Anordnung des Temperaturfühlers im Fluid ggf. zu Dichtigkeitsproblemen führen kann, ist alternativ hierzu auch die Temperaturüberwachung durch Messung der Temperatur am RHK (Rohrheizkörper) bzw. an dessen freie Enden 26, 28 innerhalb des Elektronikgehäuses 36 möglich. Dies hat den zusätzlichen Vorteil, dass der Temperaturfühler und die zu diesem führenden elektrischen Leitungen vom Elektronikgehäuse 36 geschützt sind.

Vorzugsweise erfolgt die Sensierung (Erfassung) der Temperatur (beispielsweise am Ein- und Auslass des Gehäuses 2) mittels z.B. NTC-Fühler, die geeignet gehäust im Fluidstrom positioniert sind. Die Weitergabe der Erfassungssignale an die Steuerelektronik erfolgt über eine Signalleitung welche in einem Rohr eingebettet gedichtet aus dem Fluidraum (innerhalb des Gehäuses 2) vorzugsweise in radialer Richtung geführt ist. Die Enden der Signalleitung sind dabei mit der Elektronik verlötet. Es kann ferner vorgesehen sein, dass beide Temperaturfühler durch nur einen Durchdringungsbereich (eine einzige Öffnung im Gehäuse 2) geführt sind, um insbesondere eine weitere Dichtstelle einzusparen, wobei natürlich auch zwei Durchdringungsbereiche im Gehäuse 2 möglich sind.

Ferner kann die Elektronik entweder passiv vor äußerer Temperatureinwirkung durch eine entsprechende Wärmeisolation des Elektronikgehäuses 36 geschützt sein und/ oder es erfolgt eine aktive Kühlung der Elektronik beispielsweise über geeignete Kühlkörper (durch Konvektion). Alternativ oder additiv hierzu kann die Kühlung auch über Kühlrippen erfolgen, die mit dem fluidführenden Gehäuse 2 (thermisch) verbunden sind, um Wärmeenergie in das Gehäuse 2 abzugeben.

Das erfindungsgemäße Konzept eines elektrischen Heizers insbesondere eines Wasserheizers hat gegenüber dem bekannten Stand der Technik eine Anzahl von Vorteilen, wie sie nachfolgend aufgeführt sind:
- Der erfindungsgemäße Heizer (einschließlich seiner Steuerelektronik) baut relativ kompakt, da das fluidführende Gehäuse 2, die das Elektronikgehäuse 36 umgreifende Befestigungs- und Montagelaschen 34 und das Elektronikgehäuse 36 selbst, in das die freien Enden 26, 28 des zumindest einen Rohrheizkörpers 16 hineinragen, zu einem Bauteilverbund zusammengefügt sind und damit wenig Freiraum zwischen den einzelnen Bauteilen verbleibt.
- Des Weiteren erbringt dieses Montagekonzept eine erhöhte Sicherheit beispielsweise im Crashfall, da sich die Halterungslaschen 34 als das Elektronikgehäuse 36 aussteifend auswirken.
- Es wird eine erhöhte Schwingfestigkeit insbesondere infolge der Halterungs- bzw. Montagelaschen 34 erreicht, die das vorzugsweise aus Kunststoff bestehende Elektronikgehäuse 36 seitlich stützen.
- Insbesondere das fluidführende Gehäuse 2 ist durch die Ausbildung der zwei Halbschalenelemente 10, 12 einfach zu fertigen.
- Die Kühlung der Elektronik erfolgt effektiv ggf. durch direkte Wärmeeinleitung in das fluid- bzw. wasserführende Gehäuse.
- Das Heizsystem mit den erfindungsgemäßen konstruktiven Merkmalen kann eine Leistung von typischerweise 5kW bis 8kW darstellen.

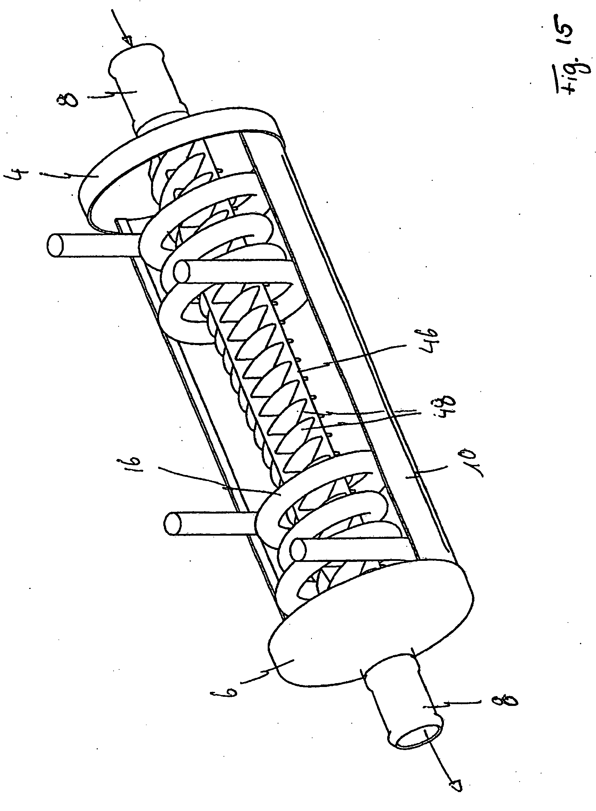

Im Nachfolgenden wird ein zweites bevorzugtes Ausführungsbeispiel der Erfindung anhand der Fig. 15 bis 16a beschrieben, wobei im Wesentlichen nur auf die konstruktiven sowie funktionellen Unterschiede zum ersten bevorzugten Ausführungsbeispiel eingegangen werden soll, wohingegen die übrigen (nicht weiter erwähnten) Merkmale mit dem ersten Ausführungsbeispiel im Wesentlichen übereinstimmen. Daher werden auch für gleiche (bereits beschriebene) Bauteile die gleichen Bezugszeichen verwendet.

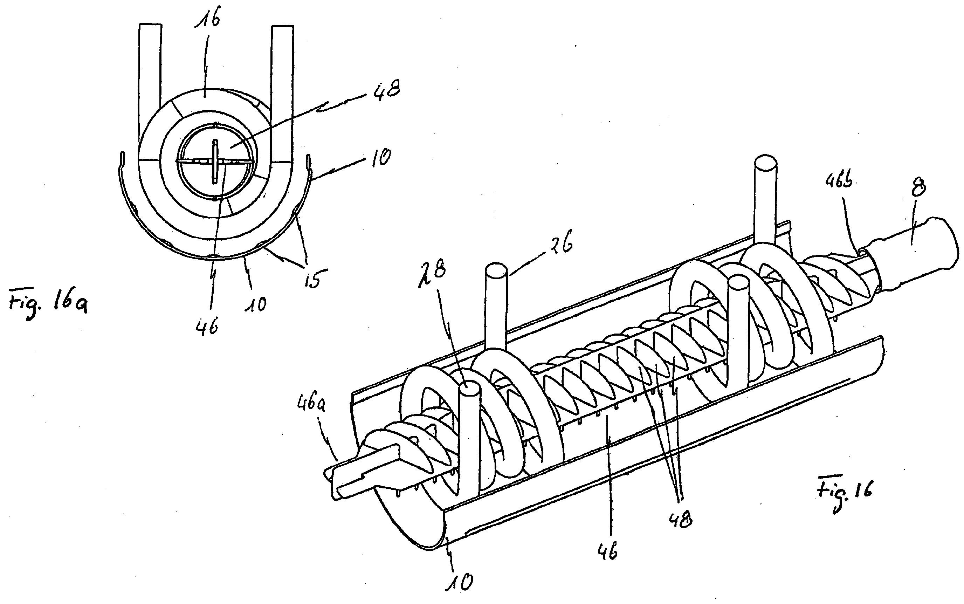

Gemäß der Fig. 16 ist zur Halterung (radiale Abstützung) des zumindest einen RHK 16 ein zentraler Trägerbalken 46 aus einem metallischen oder Kunststoffmaterial vorgesehen, der sich längs der Wendelachse des zumindest einen RHK 16 erstreckt und eine Anzahl von vorzugsweise plattenförmigen, radial vorragenden Streben oder Rippen 48 hat, die sich im Wesentlichen punktuell am Innenumfang des RHK anlegen können. Im Konkreten sind die plattenförmigen Rippen 48, die vorzugsweise aus einem Metall oder Kunststoff bestehen, quer zur Balkenlängsrichtung und vorzugsweise in einem Winkel zur Balkenlängsrichtung angestellt und übernehmen so hauptsächlich die Funktion von Strömungsleit-/ bzw. Verwirbelungselementen. Der Trägerbalken 46 selbst hat im Querschnitt ein "+"-profil (Kreuzprofil), um eine maximale Anströmung der Rippen 48 zu erreichen. Die durch das "+"-Profil definierte radiale Umfang des Trägerbalkens 46 ist so bemessen, dass sich der Trägerbalken 46 am Innumfang des wendelförmigen RHK (punktuell) anlegt und diesen somit stützt. An den axialen Endabschnitten 46a, 46b des Trägerbalkens 46 ist dieser in seiner radialen Abmessung verringert (bei aufrecht erhaltenem Querschnittsprofil), um in die in Strömungsrichtung beabstandeten Fluidanschlüsse 8 an den Verschlussdeckeln 4, 6 eingesteckt werden zu können. Auf diese Weise wird der Trägerbalken 46 endseitig in den Anschlüssen 8 gehalten.

Wie ferner aus der Fig. 16a zu entnehmen ist, sind an den rinnenförmigen Halbschalen 10 (und vorzugsweise 12) ebenfalls Verstärkungsrippen 15 angebracht, die jedoch in diesem zweiten Ausführungsbeispiel nicht den RHK 16 am Außenumfang abstützen.

Jedoch können die Verstärkungsrippen 15 auch so ausgebildet sein, wie die im ersten Ausführungsbeispiel gezeigt ist, sodass der RHK 16 zwischen dem Trägerbalken 16 und den Verstärkungsrippen 15 quasi eingeklemmt wird. Die Vorteile des Heizers 1 gemäß dem zweiten bevorzugten Ausführungsbeispiel sind die gleichen wie diese des ersten bevorzugten Ausführungsbeispiels, sodass an dieser Stelle auf die vorstehende Beschreibung verwiesen werden kann.

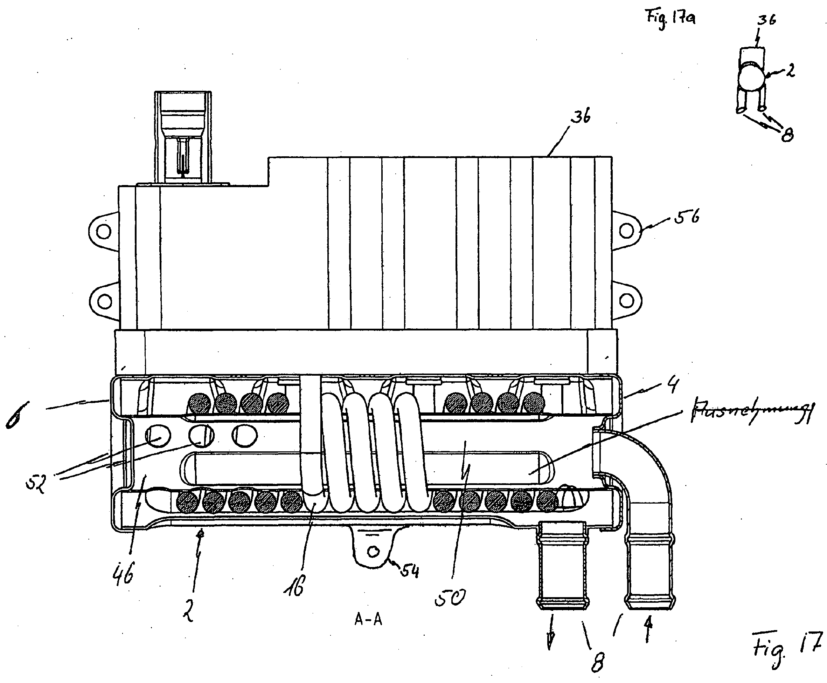

Abschließend wird ein drittes bevorzugtes Ausführungsbeispiel der Erfindung anhand der Fig. 17 beschrieben, wobei im Wesentlichen nur auf die konstruktiven sowie funktionellen Unterschiede zum zweiten bevorzugten Ausführungsbeispiel eingegangen werden soll, wohingegen die übrigen (nicht weiter erwähnten) Merkmale mit dem ersten und zweiten Ausführungsbeispiel im Wesentlichen übereinstimmen. Daher werden auch für gleiche (bereits beschriebene) Bauteile die gleichen Bezugszeichen verwendet.

Gemäß dem dritten bevorzugten Ausführungsbeispiel der Erfindung (siehe Fig. 17) besteht der Trägerbalken 46 im Unterschied zum zweiten Ausführungsbeispiel nicht aus einem "+"-Profil, sondern aus einem Rohrteil (Metall, Alu oder Kunststoff), der an seinen axialen Enden an den jeweiligen Verschlussdeckeln 4, 6 angesetzt (angeschweißt, gelötet oder aufgesteckt) ist. Dabei ist der eine Verschlussdeckel 4 mit dem Einlassanschluss 8 (diesmal in 90° gekröpfter Form) versehen, wohingegen der andere Verschlussdeckel 6 vorliegend als Blindstopfen ausgebildet ist, um das Rohrteil endseitig zu verschließen. Stattdessen ist ein weiterer Fluidanschluss 8 (als Auslass dienend) mantelseitig im Gehäuse 2 insbesondere in einer rinnenförmigen Halbschale 10 vorgesehen und zwar auf Seiten (im Bereich) des Einlassanschlusses.

Der Außenumfang des als Rohrteil ausgeführten Trägerbalkens 46 ist so bemessen, dass es mit dem zumindest einen RHK 16 an dessen Innenumfang anliegt und diesen radial abstützt. Alternativ hierzu kann es aber auch vorgesehen sein, dass am Außenumfang des Rohrteils axial sich erstreckende Außenleisten 50 angeordnet sind, an welchen sich der RHK-16 innseitig abstützt und die optional Strömungsleitfunktionen übernehmen. Des Weiteren sind in dem Rohrteil 46 insbesondere auf Seiten (im Bereich) des als Blindstopfen ausgebildeten Verschlussdeckels 6 eine Anzahl von radialen Durchgangsbohrungen 52 ausgeformt, die den Innenraum des Rohrteils mit dem diesen umgebenden Innenraum des Gehäuses 2 verbinden.

Schließlich sind beim dritten Ausführungsbeispiel Montagelaschen und Potentialausgleich getrennt. Im Konkreten sind Montage-/Befestigungslaschen 56 am Gehäuse 36 der Elektronik ausgebildet, wohingegen weitere Laschen 54 mit Potentialausgleichsfunktion am (zylinderförmigen) Gehäuse 2 des Heizers 1 ausgeformt/angeordnet sind.

Einströmendes Fluid wird somit zuerst durch das innere Rohrteit/Trägerbalken 46 geleitet und dann durch die Durchgangsbohrungen 52 nach Außen in den Innenraum des Gehäuses 2 gedrückt. Darauf hin strömt das Fluid entlang des Außenumfangs des Rohrteils 46 zurück zum Auslassanschluss 8 und wird dabei durch den zumindest einen RHK 16 aufgeheizt. Durch diese konstruktive Variante ist es folglich möglich, den Ein- und Auslass auf der gleichen axialen Endseite des Gehäuses 2 anzuordnen und trotzdem eine optimale Wärmeübertragung auf das durchströmende Fluid zu gewährleisten.

Abschließend sei darauf hingewiesen, dass beim dritten Ausführungsbeispiel der Erfindung gemäß Fig. 17 die Fluidanschlüsse 8 am einen axialen Endabschnitt des Gehäuses 2 so angeordnet sind, dass sie einen Axialabstand zueinander ausbilden. Alternativ oder zusätzlich können die beiden Fluidanschlüsse 8 aber auch im Radialabstand zueinander an dem einen Endabschnitt des Gehäuses 2 angeordnet sein, wie dies skizzenhaft in Fig. 17a dargestellt ist.

Entscheidend für alle Ausführungsbeispiele ist es jedoch, die Strömung im Bauteil so zu optimieren, dass ein Ansaugen von Luft sicher unterbunden wird. Dies ist nötig, da das Ansaugen von Luft eine Art Luftkammer bilden kann, in der die Heizelemente ohne Umspülung frei stehen, was zu lokaler Überhitzung des Rohrheizkörpers führt und ggf. eine unerwünschte Abschaltung der Heizeinheit nach sich zieht.

Wie eingangs erwähnt, ist die Heizwendel, die beispielsweise als Widerstandsheizelement 20 ausgebildet ist, aus einem Material hergestellt, das in einem Betriebstemperaturbereich eine in etwa lineare R-T-Kennlinie aufweist. Für die im Folgenden noch näher erläuterte Ansteuerung des Heizers 1 ist die Kenntnis dieser Kennlinie wichtig, so dass vor Inbetriebnahme des Heizers 1 bei der Fertigung noch eine Kalibrierung oder Messung der individuellen Kennlinie erfolgen sollte.

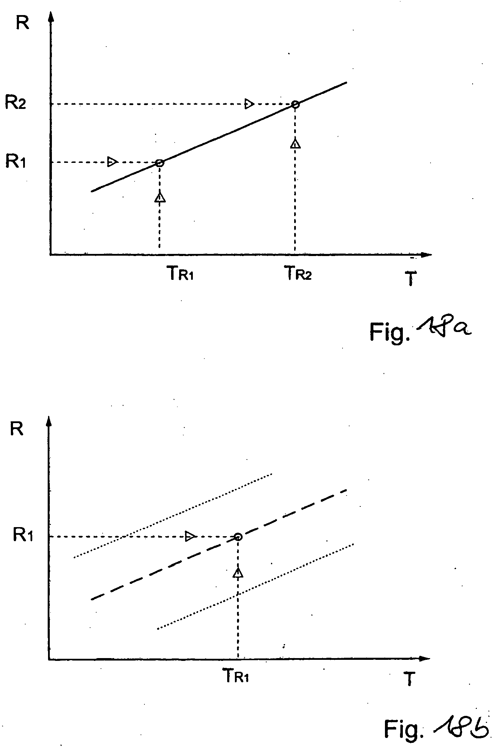

Figur 18a zeigt eine Möglichkeit, eine derartige Kennlinie zu messen. Dabei werden bei zwei vorgegebenen Referenztemperaturen TR1, TR2 und vorgegebener Betriebsspannung (Hochvolt, Niedervolt) die sich dabei einstellenden entsprechenden Widerstände R1, R2 des Widerstandsheizelementes 20 erfasst und dann aus diesen beiden Wertepaaren die als linear angenommene Kennlinie gemäß Figur 18a ermittelt, die durch die beiden Wertepaare hindurch verläuft. Auf diese Weise lässt sich die Kennlinie für jedes Widerstandsheizelementes 20 ermitteln, so dass Fertigungsungenauigkeiten und Materialschwankungen durch diese Kalibrierung jedes Widerstandsheizelementes 20 ausgeglichen werden können.

Die derart gemessenen Kennlinien werden dann in einem Datenspeicher der Leistungselektronik abgelegt.

Bei dem vorbeschriebenen Kalibrierungsverfahren müssen für jedes Widerstandsheizelement zumindest zwei Messungen durchgeführt werden.

Figur 18b zeigt eine vereinfachte Kalibrierung, bei der unter der Annahme, dass die Steigung der Kennlinie auch bei Fertigungs- und Materialschwankungen gleich bleibt und allenfalls eine Parallelverschiebung der Kennlinien erfolgt, zu deren Bestimmung lediglich eine einzige Messung erforderlich ist. D.h. es wird bei einer vorgegebenen Referenztemperatur TR1 der sich einstellende Widerstand des Widerstandsheizelementes ermittelt, so dass dann bei ebenfalls vorgegebener Steigung die Ist-Kennlinie (gestrichelt in Figur 18b) ermittelt und im Datenspeicher der Leistungselektronik abgelegt werden kann.

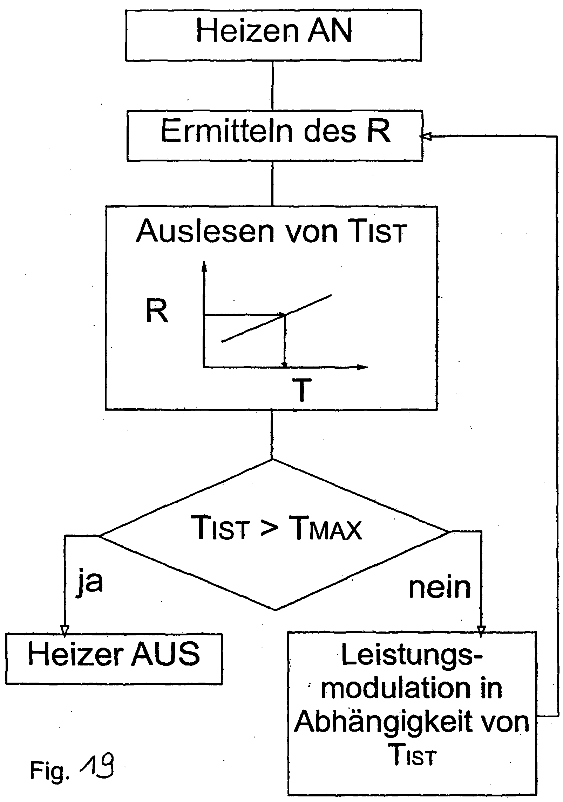

In Kenntnis dieser Kennlinien erfolgt die Ansteuerung des Heizers 1 dann gemäß dem stark vereinfachten Ablaufschema in Figur 19.

Bei Inbetriebnahme des Fahrzeugs wird der Heizer zur Erwärmung des Luftstroms zunächst mit voller Leistung oder entsprechend der Vorgaben der Klimaanlagensteuerung mit verringerter Leistung, beispielsweise bei einigen abgeschalteten Heizkreisen angeschaltet.

Über ein Schalt- oder Regelelement, welches den jeweiligen Heizkreis ansteuert und das auf einer Platine verbaut ist, kann dann bei geeigneter Auslegung auch eine Strommessung stattfinden, so dass in Abhängigkeit von der vorgegebenen Bordspannung (Hochvolt, Niedervolt) und dem gemessenen Strom der Widerstand des Widerstandsheizelementes 20 bestimmt werden kann.

In Abhängigkeit von diesem Widerstand wird dann aus der abgelegten Kennlinie des Widerstandsheizelementes 20 eine Ist-Temperatur T_{IST} ausgelesen und diese Temperatur des Widerstandsheizelementes 20 mit einer in der Leistungselektronik abgelegten Maximaltemperatur T_{Max} verglichen.

In dem Fall, in dem die Ist-Temperatur die vorgegebene Maximaltemperatur überschreitet, wird der Heizer 1 ausgeschaltet oder zumindest einer der Heizkreise abgeschaltet.

In dem Fall, in dem die Ist-Temperatur unterhalb der Maximaltemperatur liegt, erfolgt über die Leistungselektronik eine Leistungsmodulation in Abhängigkeit von der Ist-Temperatur, um die Aufwärmung des Luftstroms zu optimieren, wobei bei hinreichendem Leistungseintrag die den einzelnen Heizkreisen zugeführte elektrische Leistung verringert und/oder einzelne Heizkreise abgeschaltet werden können, so dass die Belastung des Heizers 1 stets auf ein Optimum reduziert ist, bei dem ein minimaler Verbrauch mit einer hinreichenden Erwärmung des Luftstroms einhergeht.

Beim dargestellten Ausführungsbeispiel wird für das Widerstandsheizelement 20 ein Material verwendet, das eine leichte PTC-Charakteristik aufweist. Dieser PTC-Effekt ist jedoch keinesfalls vergleichbar mit demjenigen eines richtigen PTC-Widerstandes, reicht jedoch aus, um die Temperatur des Heizelementes in Abhängigkeit vom Widerstand zu bestimmen.

Der erfindungsgemäße elektrische Heizer hat ein ein Fluid führendes Gehäuse, in welchem zumindest ein wendelförmiger Heizkörper, aufgenommen ist. Der Heizkörper weist einen rohrförmigen Außenkörper auf, in welchem ein mit einer in einem Elektronikgehäuse untergebrachten Steuerschaltung elektrisch kontaktiertes Heizelement eingebettet ist. Gemäß der Erfindung sind Endabschnitte des wendelförmigen Heizkörpers gedichtet durch das fluidführende Gehäuse hindurch in ein Elektronikgehäuse geführt.

Offenbart sind des Weiteren ein Verfahren zum Ansteuern eines elektrischen Heizers und ein nach einem derartigen Verfahren betreibbarer Heizer, wobei dieser mit zumindest einem Widerstandsheizelement ausgeführt ist, das selbst als Thermofühler wirkt, so dass dessen Temperatur zur Ansteuerung des Heizers verwendet werden kann.

### Bezugszeichenliste

- 1: Heizer
- 2: Zylinderförmiges Gehäuse
- 4, 6: Verschlussdeckel
- 8: Fluidanschlüsse
- 10, 12: Rinnenförmige Halbschalen
- 14: Heizeinrichtung/-gerät
- 15: Verstärkungsrippen
- 16: Rohrheizkörper
- 18: Rohr-/mantelförmiger Außenkörper
- 20: Heizwendel
- 22, 24: Axiale End(-abschnitte) der Heizwendel
- 26, 28: Axiale Enden des Heizkörpers
- 30, 32: Durchgangsöffnungen im Gehäuse
- 34: Montagelaschen / Potentialausgleich
- 36: Elektronikgehäuse
- 38: Leistenförmige Halteelemente
- 40: Gehäuseführungen
- 42: Aufstandsfüße
- 44: Durchgangsbohrungen
- 46: Trägerbalken
- 46a, 46b: Axiale Endabschnitte des Balkens
- 48: Rippen
- 50: Außenleisten
- 52: Durchgangsbohrungen
- 54: Potentialausgleich (-lasche)
- 56: Befestigungs- / Montagelasche

## Patentansprüche

1. Elektrischer Heizer zum Erwärmen eines Fluids in einem Fahrzeug mit einem Fluid führenden sowie von diesem durchströmten Gehäuse (2), in dem zumindest ein Heizkörper (16) aufgenommen ist, und mit einem Elektronikgehäuse (36), wobei
Endabschnitte (26, 28) des Heizkörpers (16) gedichtet durch das fluidführende Gehäuse (2) hindurch in das Elektronikgehäuse (36) geführt sind,
der Heizkörper (16) in Form eines gebogenen Rohrheizkörpers ausgebildet ist, der einen rohrförmigen Außenkörper (18) hat, in dem ein Heizelement (20), das mit einer in dem Elektronikgehäuse (36) untergebrachten Steuerschaltung elektrisch kontaktiert ist, derart eingebettet ist, dass zwischen dem Außenkörper (18) und dem Heizelement (20) ein ringspaltförmiger Zwischenraum ausgebildet ist, der mit einem Isolator aufgefüllt ist, wobei der Außendurchmesser des Heizelements (20) wesentlich kleiner als der Innendurchmesser des Außenkörpers (18) ist, und
, wobei die Endabschnitte (26, 28) des Heizkörpers (16) in einem Winkel, etwa quer zu einer Durchströmungsrichtung aus dem fluidführenden Gehäuse (2) herausgeführt sind, und
wobei der Heizkörper (16) wendelförmig ausgebildet ist.

2. Elektrischer Heizer nach einem der vorstehenden Ansprüche, bei dem der Heizkörper (16) wendelförmig ausgebildet ist und umfangsseitig und/oder innenseitig sowie in Umströmungsrichtung durch Halteelemente (38) abgestützt ist.

3. Elektrischer Heizer nach Anspruch 2, bei dem die Halteelemente (38) in Umfangsrichtung des wendelförmigen Heizkörpers (16) beabstandete Haltebleche oder Leisten sind, die sich parallel zur Windungsachse des Heizkörpers (16) erstrecken und vorzugsweise punktuell mit dem Heizkörper (16) in Halteeingriff stehen.

4. Elektrischer Heizer nach Anspruch 2 bei dem die Halteelemente (38) aus einem zentralen, längs der Windungsachse des Heizkörpers (16) sich erstreckenden sowie den wendelförmigen Heizkörper (16) innenseitig abstützenden Trägerbalken (46) besteht, an dem eine Anzahl von in Balkenlängsrichtung beabstandeten radialen Platten oder Rippen (48) angeordnet ist, die Strömungsleitelemente vorzugsweise zur Verwirbelung des Fluidstroms bilden.

5. Elektrischer Heizer nach Anspruch 4, bei dem der Trägerbalken (46) vorzugsweise einen "+" -förmigen Querschnitt hat und an seinen axialen Endabschnitten in in Strömungsrichtung beabstandete Ein- und Auslässe (8) des Gehäuses (2) eingesetzt ist.

6. Elektrischer Heizer gemäß einem der vorstehenden Ansprüche 1 bis 5, wobei das fluidführende Gehäuse (2) ein den Heizkörper (16) tragendes, vorzugsweise rinnenförmig ausgebildetes Schalenteil (10), ein dieses ergänzendes, ebenfalls vorzugsweise rinnenförmig ausgebildetes Schalenteil (12) sowie zwei stirnseitige Gehäuseabschlussteile (4, 6) jeweils mit einem Fluidzu- oder Fluidablauf (8) hat.

7. Elektrischer Heizer nach Anspruch 6, bei dem die Schalenteile (10, 12) und Gehäuseabschlussteile (4, 6) form- oder stoffschlüssig insbesondere durch Schweißen, Löten oder Kleben verbunden sind.

8. Elektrischer Heizer nach einem der vorstehenden Ansprüche, bei dem das fluidführende Gehäuse (2) zylinderförmig ausgebildet ist.

9. Elektrischer Heizer nach einem der vorhergehenden Ansprüche, mit einer Leistungselektronik, über die zumindest ein Heizkreis ansteuerbar ist und die einen Datenspeicher zur Ablage einer R-T-Kennlinie hat, wobei die Leistungselektronik zum Ermitteln eines Ist-Widerstands (R_{IST}) und zum Auslesen einer Ist-Temperatur (T_{IST}) in Abhängigkeit vom Ist-Widerstand und zum Ansteuern des Widerstandsheizelementes 20 in Abhängigkeit von der Ist-Temperatur (T_{IST}) ausgelegt ist.

10. Elektrischer Heizer nach Anspruch 9, wobei ein Steuerelement der Leistungselektronik zum Schalten oder Regeln des Widerstandsheizelementes (20) auch zur Messung der Stromstärke (I) ausgelegt ist.

11. Elektrischer Heizer nach Anspruch 1, wobei das Elektronikgehäuse über eine Halterung (34) am Gehäuse (2) gehalten ist, und wobei die Halterung (34) gleichzeitig auch eine Befestigungseinrichtung zur Befestigung des Heizers an einem Stützbauteil bildet.

## Claims

1. An electric heater for heating a fluid in a vehicle comprising a fluid guiding housing (2) through which fluid flows, in the housing at least one heating unit (16), being accommodated, and comprising an electronics housing (36), wherein
end sections (26, 28) of the heating unit (16) are guided in a sealed manner through the fluid-guiding housing (2) to an electronics housing (36),
the heating unit (16) is formed as a bent tubular heating unit including a tubular outer body (18) in which a heating element (20) electronically contacted with a control circuit accommodated in the electronics housing (36) is embedded such that between the outer body (18) and the heating element (20) a clearance having the shape of an annular gap is formed which is filled with an insulator, the outer diameter of the heating element (20) being substantially smaller than the inner diameter of the outer body (18), and wherein end sections (26, 28) of the heating unit (16) are guided out of the fluid-guiding housing (2) at an angle approximately transversely to a trough-flow direction, and
wherein the heating unit (16) is helically shaped.

2. The electric heater according to any one of the preceding claims, in which the heating unit (16) is helically shaped and is supported by holding elements (38) at the peripheral side and/or at the inside as well as in flow-around direction.

3. The electric heater according to claim 2, in which the holding elements (38) are holding sheets or strips spaced in circumferential direction of the helical heating unit (16) that extend in parallel to the winding axis of the heating unit (16) and are in holding engagement preferably locally with the heating unit (16).

4. The electric heater according to claim 2, in which the holding elements (38) consist of a central support beam (46) extending along the winding axis of the heating unit (16) and at the inside supporting the helical heating unit (16) at which support beam a number of radial plates or ribs (48) spaced in longitudinal beam direction are arranged that form flow baffles preferably for swirling the fluid flow.

5. The electric heater according to claim 4, in which the support beam (46) preferably has a "+" shaped cross-section and is inserted at its axial end section in inlets and outlets (8) of the housing (2) spaced in flow direction.

6. The electric heater according to one of the preceding claims 1 to 5, wherein the fluid-guiding housing (2) includes a preferably groove-shaped shell member (10) supporting the heating unit (16), an equally preferably groove-shaped shell member (12) complementary to the former as well as two front-side housing end portions (4, 6) each having a fluid inlet or fluid outlet (8).

7. The electric heater according to claim 6, in which the shell members (10, 12) and the housing end portions (4, 6) are connected positively or by material engagement especially by welding, soldering or gluing.

8. The electric heater according to any one of the preceding claims, in which the fluid-guiding housing (2) has a cylindrical shape.

9. The electric heater according to any one of the preceding claims, comprising a power electronics through which at least one heating circuit can be controlled and having a data memory for storing an R-T characteristic curve, the power electronics being designed for establishing an actual resistance (R_{IST}) and for reading out an actual temperature (T_{IST}) in response to the actual resistance and for controlling the resistance heating element (20) in response to the actual temperature (T_{IST}).

10. The electric heater according to claim 9, wherein a control element of the power electronics for switching or controlling the resistance heating element (20) is also designed for measuring the current intensity.

11. The electric heater according to claim 1, wherein the electronics housing is fixed to the housing (2) via a support (34), and wherein the support (34) simultaneously also forms a fastening means for mounting the heater to a supporting component.

## Revendications

1. Dispositif de chauffage électrique pour chauffer un fluide dans un véhicule avec un carter (2) conduisant le fluide et également traversé par celui-ci, dans lequel est logé au moins un corps de chauffe (16), et avec un boîtier électronique (36),
dans lequel des sections terminales (26, 28) du corps de chauffe (16) sont guidées d'une manière étanche à travers le carter (2) conduisant le fluide dans et à travers le boîtier électronique (36),
le corps de chauffe (16) est conçu en forme de corps de chauffe tubulaire coudé qui a un corps externe en forme de tube (18), dans lequel un élément de chauffage (20) qui est en contact électrique avec un circuit de commande inséré dans le boîtier électronique (36), est encastré de manière telle qu'un espace intermédiaire en forme de passage annulaire est conçu entre le corps externe (18) et l'élément de chauffage (20), qui est rempli d'un isolateur, dans lequel le diamètre extérieur de l'élément de chauffage (20) est essentiellement plus petit que le diamètre intérieur du corps externe (18), et
dans lequel les sections terminales (26, 28) du corps de chauffe (16) sont guidées hors du carter (2) conduisant le fluide, en faisant un angle, presque transversalement à un sens d'écoulement, et dans lequel le corps de chauffe (16) est conçu de forme hélicoïdale.

2. Dispositif de chauffage électrique selon la revendication précédente, dans lequel le corps de chauffe (16) est conçu de forme hélicoïdale et est supporté par des éléments de maintien (38) sur la périphérie et / ou du côté interne ainsi que dans le sens de l'écoulement.

3. Dispositif de chauffage électrique selon la revendication 2, dans lequel les éléments de maintien (38) sont des tôles de maintien ou des baguettes espacées dans le sens périphérique du corps de chauffe de forme hélicoïdale (16), qui s'étendent parallèlement à l'axe d'enroulement du corps de chauffe (16) et sont de préférence en position de maintien ponctuellement avec le corps de chauffe (16).

4. Dispositif de chauffage électrique selon la revendication 2, dans lequel les éléments de maintien (38) se composent d'une poutre porteuse centrale (46) s'étendant le long de l'axe d'enroulement du corps de chauffe (16), et supportant également côté interne le corps de chauffe de forme hélicoïdale (16), sur lequel est disposé un certain nombre de plaques ou de nervures (48) radiales espacées dans le sens longitudinal de la poutre, qui forment les éléments de guidage de l'écoulement destinés de préférence au tourbillonnement du courant de fluide.

5. Dispositif de chauffage électrique selon la revendication 4, dans lequel la poutre porteuse (46) a de préférence une section transversale en forme de « + » et est insérée sur ses sections terminales axiales dans des admissions et des sorties (8) du carter (2) espacées dans le sens d'écoulement.

6. Dispositif de chauffage électrique selon l'une des revendications précédentes 1 à 5, dans lequel le carter (2) conduisant le fluide a une partie de coque (10) portant le corps de chauffe (16), conçue de préférence en forme de goulotte, une partie de coque (12) complétant celle-ci, conçue également de préférence en forme de goulotte ainsi que deux parties d'extrémité de carter (4, 6) du côté frontal à chaque fois avec une admission de fluide ou un écoulement de fluide (8).

7. Dispositif de chauffage électrique selon la revendication 6, dans lequel les parties de coque (10, 12) et les parties d'extrémité de carter (4,6) sont reliées par engagement de forme ou de matière en particulier par soudure, brasage ou collage.

8. Dispositif de chauffage électrique selon l'une des revendications précédentes, dans lequel le carter conduisant le fluide (2) est conçu en forme de cylindre.

9. Dispositif de chauffage électrique selon l'une des revendications précédentes, avec une électronique de puissance par laquelle au moins un circuit de chauffage peut être commandé et qui a une unité de stockage pour l'archivage d'une courbe caractéristique R-T, dans lequel l'électronique de puissance est étudiée pour déterminer une résistance réelle (R_{IST}) et pour sélectionner une température réelle (T_{IST}) en fonction de la résistance réelle et pour commander l'élément de chauffage de résistance (20) en fonction de la température réelle (T_{IST}).

10. Dispositif de chauffage électrique selon la revendication 9, dans lequel un élément de commande de l'électronique de puissance est étudié pour commuter ou régler l'élément de chauffage de résistance (20) également pour mesurer l'intensité du courant (I).

11. Dispositif de chauffage électrique selon la revendication 1, dans lequel le boîtier électronique est maintenu au moyen d'une attache (34) sur le carter (2), et dans lequel l'attache (34) forme aussi simultanément un dispositif de fixation pour fixer le dispositif de chauffage à un élément d'appui.
